Europäisches Patentamt

**European Patent Office**

Office européen des brevets

(19)

(11) Veröffentlichungsnummer : **0 087 172**
**B1**

(12) **EUROPÄISCHE PATENTSCHRIFT**

(45) Veröffentlichungstag der Patentschrift :
30.12.86

(51) Int. Cl.⁴ : **H 02 P   8/00**

(21) Anmeldenummer : **83200035.0**

(22) Anmeldetag : **12.01.83**

(54) **Verfahren und Schaltungsanordnung zur Regelung des Drehmomentes eines Schrittmotors.**

(30) Priorität : **21.01.82 CH 383/82**

(43) Veröffentlichungstag der Anmeldung :
**31.08.83 Patentblatt 83/35**

(45) Bekanntmachung des Hinweises auf die Patenterteilung : **30.12.86 Patentblatt 86/52**

(84) Benannte Vertragsstaaten :
**CH DE FR GB IT LI**

(56) Entgegenhaltungen :
**GB-A- 1 434 947**
**US-A- 3 728 602**
**IBM TECHNICAL DISCLOSURE BULLETIN, Band 22, Nr. 8A, Januar 1980, New York, J.A. BEAVERS et al. "Coil current controller"**
**ELEKTRONIK, Band 29, Nr. 23, November 1980, München, H. SAX "Schrittmotoransteuerung mit monolithischen Bausteinen", Seiten 67-71**

(73) Patentinhaber : **Philips A.G.**
**Allmendstrasse 140**
**CH-8027 Zürich (CH)**
**CH LI**
**N.V. Philips' Gloeilampenfabrieken**
**Groenewoudseweg 1**
**NL-5621 BA Eindhoven (NL)**
**DE FR GB IT**

(72) Erfinder : **Thommen, Werner Felix**
**c/a Int. Octroolbureau B.V. Prof. Holstlaan 6**
**NL-5656 AA Eindhoven (NL)**

(74) Vertreter : **Beckers, Hubertus Franciscus Maria et al**
**INTERNATIONAAL OCTROOIBUREAU B.V. Prof. Holstlaan 6**
**NL-5656 AA Eindhoven (NL)**

EP 0 087 172 B1

0 087 172

## Beschreibung

Die vorliegende Erfindung betrifft ein Verfahren zur Regelung des Drehmomentes eines impulsgesteuerten Schrittmotors gemäss dem Oberbegriff des unabhängigen Patentanspruches 1 sowie eine Schaltungsanordnung zur Durchführung des Verfahrens gemäss dem Oberbegriff des unabhängigen Patentanspruches 4.

Am 56. Kongress der Chronometrie am 23. und 24. Oktober 1981 wurde in der Mitteilung Nr. 27 eine spezielle Methode zur Speisung eines Schrittmotors angegeben. Demnach erlaubt die Analyse der induzierten Spannung in der Motorwicklung infolge der Bewegung des Rotors das Verhalten des Motors während der Schrittphase zu erkennen. Heute werden diese Schrittmotoren mit Impulsen konstanter Spannung gespeist. Damit kann die Grösse der induzierten Spannung durch Bestimmung des Motorstromes erfolgen, indem ein Widerstand in die Speiseleitung geschaltet wird und die Stromverhältnisse mit dessen Hilfe festgestellt werden.

Weil sowohl die Eigeninduktivität als auch der Innenwiderstand des Motors variabel sind, ist es unerlässlich, die induzierte Spannung genau zu erkennen.

In der genannten Veröffentlichung wird demgemäss vorgeschlagen, den Motor mit einem konstanten Strom zu speisen. Damit ändert sich die Spannung an den Klemmen der Motorwicklung. Die Eigeninduktivität wird Null und der Innenwiderstand wird konstant. Damit zeigt der Spannungsverlauf dieser Klemmenspannung einen proportionalen Verlauf zur induzierten Spannung.

Als praktische Anwendung dieser Theorie wird vorgeschlagen, den Motorstrom mit einer Frequenz von z. B. 16 kHz periodisch einem Stromdiskriminator zuzuführen. Dies während einiger Mikrosekunden. Das Ausgangssignal des Diskriminators zeigt an, wenn der Strom durch den Motor grösser ist als ein Nennstrom und der Motorstrom wird abgeschaltet. Wenn der Strom kleiner ist, bleibt die Speisung bis zur nächsten Messung bestehen. Bei grösserem Strom wird der Motor kurzgeschaltet und bei der nächsten Messung wird die Speisung wieder erstellt, wenn der Motorstrom kleiner geworden ist. Andernfalls bleibt der Kurzschluss bestehen.

Weil sich der Strom in einer Induktivität nicht rasch ändert, wird der Strom auch während des Kurzschlusses nahe beim Wert des Nennstromes gehalten. Damit kann dieser Wert mittels eines aussenliegenden Widerstandes gemessen werden und damit der Strom gemäss dem effektiven Bedarf zur Erreichung des benötigten Drehmomentes angepasst werden.

Es ist nun eine Aufgabe der Erfindung ein Verfahren zu schaffen, mit dem jeder Motorimpuls überwacht werden kann und keine spezielle Messphase während des Kurzschliessens vorgesehen werden muss. Überdies soll der Motorstrom während des Antriebes gemessen werden können.

Erfindungsgemäss wird dies durch die Merkmale im kennzeichnenden Teil des unabhängigen Patentanspruches 1 erreicht. Die Schaltungsanordnung ist im Patentanspruch 4 gekennzeichnet.

Nachfolgend wird die Erfindung anhand der Zeichnung erläutert. Es zeigen :

Figur 1   ein Schaltungsschema zur Erläuterung des Prinzips,

Figur 2   ein Spannungsdiagramm für einen Antriebsimpuls,

Figur 3   das Ersatzschema und ein zugehöriges Diagramm zur Darstellung des Zusammenhanges zwischen induzierter Spannung und Einschaltdauer,

Figur 4   ein Diagramm zur Darstellung der Motorsteuerung und der Regelkriterien,

Figur 5   ein Spannungsdiagramm zur Darstellung der Wirkungsweise,

Figur 6   ein Schaltungsschema einer vollständigen Anordnung zur Regelung des Drehmomentes, und

Figur 7   Impulsdiagramme zur Erläuterung der Wirkungsweise des Schaltungsschemas nach Fig. 6.

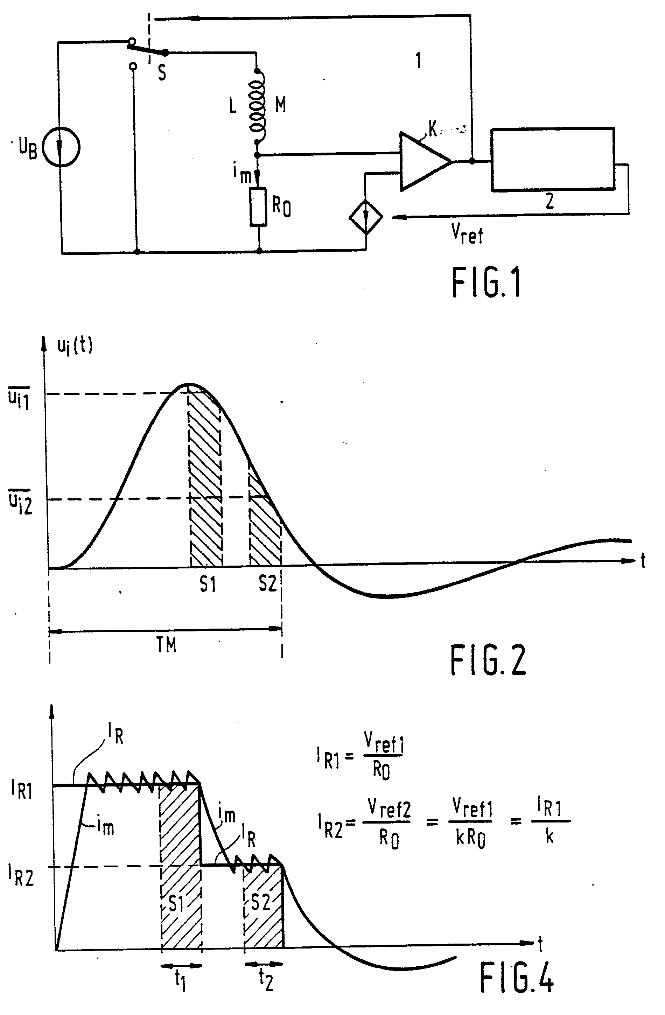

Das Grundprinzip des Verfahrens ist in Fig. 1 dargestellt. Der Schrittmotor M mit seiner Induktivität L ist während der Antriebsphase TM nur zeitweise an die Batteriespannung $U_B$ angeschlossen. Ist der Motorstrom $i_m$ kleiner als der Referenzwert $I_R = V_{ref}/R_0$, so wird der Motor über den Schalter S mit der Batterie $U_B$ verbunden, ist der Motorstrom $i_m$ grösser als $I_R$, so wird der Motor kurzgeschlossen. Durch diesen Regelkreis 1 pendelt der Motorstrom immer um den Wert $I_R$, wobei die Induktivität eine plötzliche Aenderung des Motorstromes $i_m$ verhindert. In einem zweiten Regelkreis 2 wird die Einschaltdauer des Schalters S ausgewertet und so eingestellt, dass sich optimale Antriebsverhältnisse ergeben.

Die in der Statorwicklung des Motors induzierte Spannung $u_i(t)$ ist ein Mass für die Drehgeschwindigkeit und die Position des Rotors. Ein guter Wirkungsgrad für den Motor wird erhalten, wenn die induzierte Spannung, verglichen mit dem Antriebsimpuls TM etwa den in Fig. 2 gezeigten Verlauf aufweist. Der Pegel des Motorstromes $i_m$ wird durch Ändern der Referenzspannung $V_{ref}$ so geregelt, dass das Verhältnis der mittleren induzierten Spannungen ($\overline{u_{i1}}$, $\overline{u_{i2}}$) in zwei fest vorgegebenen Messintervallen (S1, S2) einen konstanten Wert k aufweist. Optimale Antriebsverhältnisse ergeben sich bei Kleinstmotoren, wenn S1 an das Ende der Beschleunigungsphase, S2 an das Ende des Antriebspulses gelegt wird, und $k = \overline{u_{i1}}/\overline{u_{i2}} = 2$ gewählt wird.

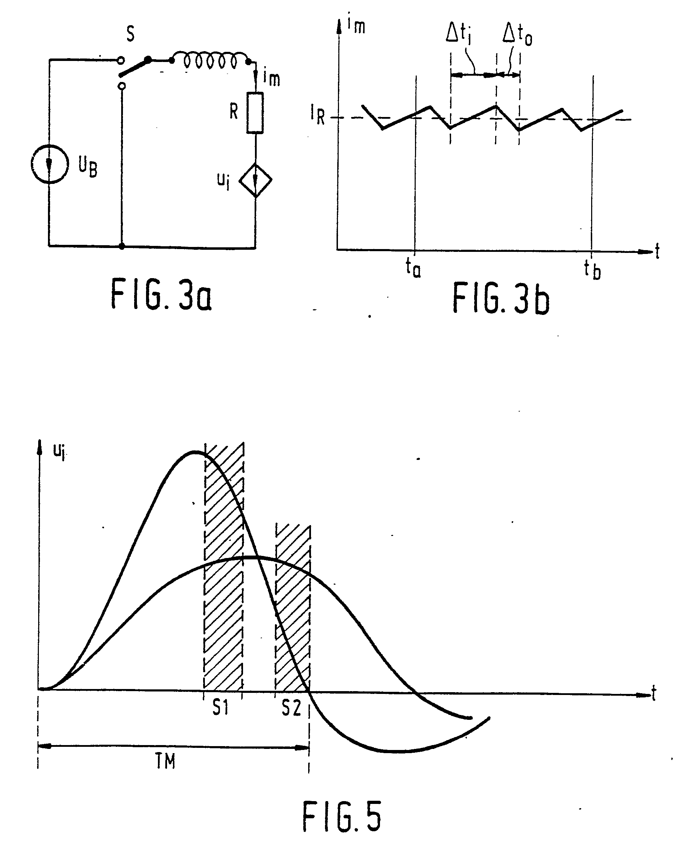

Der Zusammenhang zwischen induzierter Spannung $u_i$ und Einschaltdauer $t_{ein}$ kann aus der Darstellung von Fig. 3 abgeleitet werden. Ist der Motor mit einer Induktivität L und dem Spulenwiderstand R an die Batterie mit der Spannung $U_B$ angeschlossen, gilt :

$$U_B = u_i + i_m R + L\frac{di_m}{dt}$$

$$U_B \approx u_i + I_R R + L\frac{\Delta i_{m\,ein}}{\Delta t_{ein}} \tag{1}$$

Bei Kurzschluss gilt :

$$O = u_i + i_m R + L\frac{di_m}{dt}$$

$$O \approx u_i + I_R R + L\frac{\Delta i_{m\,aus}}{\Delta t_{aus}} \tag{2}$$

Wegen Regelkreis 1 gilt :

$$\Delta i_{m\,ein} = -\Delta i_{m\,aus} \tag{3}$$

Aus Gleichungen [1], [2] und [3] lässt sich die relative Einschaltzeit $\varepsilon$ ausrechnen.

$$\varepsilon = \frac{\Delta t_{ein}}{\Delta t_{ein} + \Delta t_{aus}} = \frac{u_i + I_R R}{U_B} \tag{4}$$

Die gesamte Einschaltdauer $t_{ein}$ während eines Messintervalles S1, S2 mit der Anfangszeit $t_a$ und der Endzeit $t_b$ erhält man durch Integration von $\varepsilon$.

$$t_{ein} = \int_{t_a}^{t_b} \varepsilon\, dt = \frac{I_R R}{U_B}(t_b - t_a) + \int_{t_a}^{t_b} \frac{u_i}{U_B}\, dt \tag{5}$$

$$t_{ein} = \frac{I_R R}{U_B}(t_b - t_a) + \frac{\overline{u_i}}{U_B}(t_b - t_a) = \frac{t_b - t_a}{U_B}(I_R R + \overline{u_i})$$

Um das Regelziel $\overline{u_{i1}}/\overline{u_{i2}} = k$ unabhängig vom Wert des Spulenwiderstandes R zu erreichen, wird die Referenzspannung $V_{ref}$ in der in Fig. 4 dargestellten Weise anschliessend an das erste Messintervall S1 vom Wert $V_{ref1}$ auf den Wert $V_{ref2} = V_{ref1}/k$ umgeschaltet. Diese beiden Werte ergeben sich nach den Formeln :

$$V_{ref1} = R_0 I_{R1} \quad \text{und} \quad V_{ref2} = R_0 I_{R2}$$

Während der beiden Messintervalle wird die relative Einschaltdauer bestimmt.

$$\varepsilon_1 = \frac{t_{ein1}}{t_1} = \frac{I_{R1} R + \overline{u_{i1}}}{U_B}$$

$$\varepsilon_2 = \frac{t_{ein2}}{t_2} = \frac{I_{R2} R + \overline{u_{i2}}}{U_B} = \frac{\frac{I_{R1} \cdot R}{k} + \overline{u_{i2}}}{U_B}$$

Aus $\varepsilon_1$ und $\varepsilon_2$ wird die Regelgrösse $\varepsilon_r$ gebildet, die den unbekannten Wert R nicht mehr enthält :
RESERVE 2 QG

$$\varepsilon_r = \varepsilon_1 - k\varepsilon_2 = \frac{\overline{u_{i1}} - k\overline{u_{i2}}}{U_B} \tag{6}$$

Es ergeben sich nun 3 Fälle (Fig. 5) :

$$\varepsilon_r = 0 : \quad \overline{u_{i1}} = k\overline{u_{i2}}$$

Der Antrieb entspricht der gewünschten Intensität. Die Referenzspannung $V_{ref}$ wird nicht verändert.

$$\varepsilon_r > 0 : \quad \overline{u_{i1}} > k\overline{u_{i2}}$$

Der Antrieb ist zu stark. Die Referenzspannung $V_{ref}$ muss für den nächsten Antriebspuls verkleinert werden.

$$\varepsilon_r < 0 : \quad \overline{u_{i1}} < k\overline{u_{i2}}$$

Der Antrieb ist zu schwach. $V_{ref}$ muss für den nächsten Antriebspuls vergrössert werden.

Anstelle der relativen Einschaltzeiten $\varepsilon_1$ und $\varepsilon_2$ können auch die Einschaltzeiten $t_{ein1}$ und $t_{ein2}$ direkt für das Regelkriterium gebraucht werden. Wird $t_1 = t_2$ gewählt, so muss die Differenz $t_{ein1}$-$k \cdot t_{ein2}$ auf Null geregelt werden, während bei $t_2 = k \cdot t_1$ der Wert $t_{ein1}$-$t_{ein2}$ auf Null gebracht werden muss.

Um das Einlaufen des Referenzstromes $I_R$ in den Regelbereich auch unter extremen Bedingungen wie bei Schock oder Start beim Anlegen der Batteriespannung zu erzwingen, wird $I_R$ auf einen Maximalwert begrenzt. Wenn der Motor am Anfang des Motorimpulses länger als eine gegebene Zeit T0 eingeschaltet ist, wird $I_R$ automatisch reduziert, bis die maximale Einschaltzeit T0 beträgt. Erst jetzt beginnt die Einstellung aufgrund der Messung der induzierten Spannung.

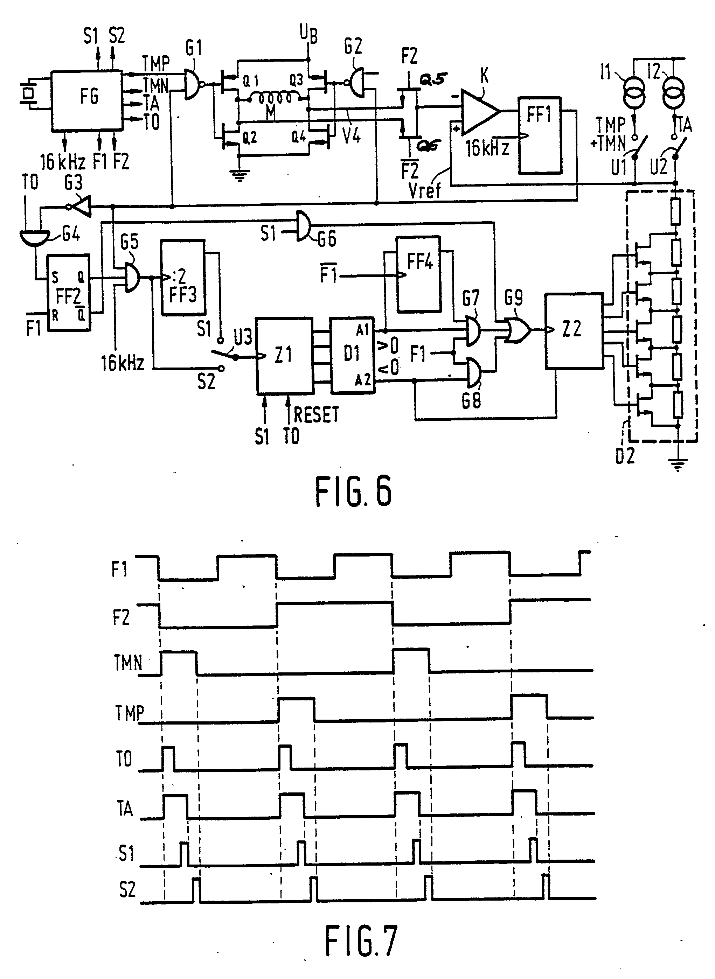

Nachfolgend wird ein vollständiges Schaltungsbeispiel für einen polarisierten Schrittmotor anhand von Fig. 6 und 7 beschrieben. Der Schrittmotor M wird über die Brückenschaltung mit den Transistoren Q1, Q2, Q3, Q4 abwechslungsweise in positiver und negativer Stromrichtung angesteuert. Die für den Betrieb notwendigen Frequenzen und Impulsformen werden vom quarzgesteuerten Frequenzgenerator FG geliefert. Während des positiven Motorschrittes sind die Transistoren Q1, Q4 und Q5 leitend und Transistoren Q2, Q3 und Q6 gesperrt. Durch Transistor Q5 wird der zum Motorstrom $i_m$ proportionale Spannungsabfall V4 über Transistor Q4 an den Eingang des Komparators gelegt und mit der Referenzspannung $V_{ref}$ verglichen. Sobald V4 grösser als $V_{ref}$ wird, wechselt der Ausgang von K von logisch 1 auf logisch 0. Dieser Wert wird in das mit der Frequenz 16 kHz getaktete 1-Bit Schieberegister FF1 eingeschrieben, sodass nach dem nächsten 16 kHz Takt der Antriebsimpuls über das Gatter G1 unterbrochen wird. Der Transistor Q2 ist jetzt leitend, sodass der Motor über die Transistoren Q2 und Q4 kurzgeschlossen ist. Dadurch sinkt der Motorstrom $i_m$. Sobald der Spannungsabfall V4 kleiner ist als die Referenzspannung $V_{ref}$, wird nach dem nächsten 16 kHz Takt die Batteriespannung $U_B$ über den Transistor Q1 an den Motor M angelegt.

Die Referenzspannung $V_{ref}$ ist durch die Impedanz des Widerstandsdecoders D2 und den Wert der beiden gleich grossen Stromquellen I1 und I2 bestimmt. I1 ist während des ganzen Antriebsimpulses (TMP, TMN) eingeschaltet, I2 nur während der Beschleunigungsphase TA. Die Referenzspannung $V_{ref}$ sinkt somit nach Ablauf der Zeit TA anschließend an das 1. Meßintervall S1, bis zum Schluss des Antriebsimpulses auf den halben Wert.

Die Anschaltdauer $t_{ein}$ des Motors M an die Speisespannung $U_B$, mittels des Ausgangs von FF1 im Zustand 1, wird nun im unteren Teil der Schaltung von Fig. 6 zur Regelung der Referenzspannung $V_{ref}$ ausgewertet. Erreicht die Spannung V4 erst nach Ablauf der Impulsdauer T0 den Wert $V_{ref}$, erscheint infolge der Sperrung durch das Gatter G4 am Flip-flop FF2 kein Stellsignal, sodass der invertierte Ausgang $\overline{Q}$ des Flipflops FF2 immer das Signal 1 behält. Über die Gatter G6 und G9 erscheint nun ein Zählimpuls S1 am Aufwärts/Abwärts-Zähler Z2, der sich im Zustand abwärts befindet. Dadurch stellt sich der vom Zähler Z2 angesteuerte Widerstandsdecoder D2 auf einen tieferen Wert ein und die Referenzspannung $V_{ref}$ wird um einen Schritt verkleinert. Dieser Regelvorgang wird bei jedem Motorschritt wiederholt, bis die Einschaltzeit am Anfang des Motorimpulses kleiner ist als die Zeit von T0. Ist dieser Zustand erreicht, so erhält der Flipflop FF2 einen Stellimpuls, das Gatter G6 wird gesperrt und das Gatter G5 freigegeben. Das Messen der Einschaltzeit $t_{ein}$ während der gleich langen Messintervalle S1 und S2 erfolgt durch Zählen der 16 kHz Impulse, solange der Ausgang des Flipflops FF1 im Zustand 1 ist. Während des Messintervalles S1 wird die Anzahl der 16 kHz Impulse im Flipflop FF3 durch zwei dividiert und über einen Umschalter U3 in den Aufwärts/Abwärts-Zähler Z1 eingeschrieben, der sich im Zustand aufwärts befindet.

Während der Messzeit S2 ist der Zähler Z1 im Zustand abwärts und die 16 kHz Impulse werden direkt in den Zähler Z1 eingelesen. Nach Ablauf der Messzeit S2 enthält der Zähler Z1 somit eine Zahl, die proportional ist zur Motoreinschaltzeit während der Messzeit S1 minus zweimal die Motoreinschaltzeit während der Messzeit S2. Ist der Inhalt des Zählers Z1 Null, so erscheint kein Signal am Ausgang des Widerstandsdecoders D1 und der Inhalt des Zählers Z2 wird nicht geändert. Ist der Inhalt kleiner als Null, erscheint am Ausgang A2 eine 1 die über die Gatter G8 und G9 zum Inhalt des Zählers Z2 dazugezählt wird, so dass die Referenzspannung $V_{ref}$ um eine Stufe erhöht wird. Ist der Inhalt des Zählers Z1 grösser als Null, so wird der Ausgang an A1 des Widerstandsdecoders D1 gleich 1. Dieser Wert wird in das 1 Bit-Schieberegister FF4 eingeschrieben und bis zum nächsten Motorimpuls gespeichert. Wegen des Gatters G7 wird erst, wenn bei zwei aufeinanderfolgenden Motorimpulsen A1 gleich 1 ist, der Inhalt des Zählers Z2 um 1 vermindert und damit die Referenzspannung verkleinert. Durch diese Massnahme wird erreicht, dass der Referenzstrom bei einem unsymmetrischen Schrittmotor immer durch die schwächere der beiden Antriebsrichtungen bestimmt wird.

Durch diesen Regelvorgang wird also die Referenzspannung $V_{ref}$ so eingestellt, dass die Motoreinschaltzeit während des Messintervalles S1 doppelt so lange ist wie während des gleich langen Messintervalles S2, das heisst, dass die induzierte Spannung während S1 doppelt so gross ist wie während S2. Die Einstellung der Referenzspannung $V_{ref}$ erfolgt schrittweise. Pro Antriebsimpuls kann die Referenzspannung $V_{ref}$ um höchstens eine Stufe geändert werden.

**0 087 172**

Patentansprüche

1. Verfahren zur Regelung des Drehmomentes eines impulsgespeisten Schrittmotors mit variabler Einschaltdauer der Speisespannung, wobei der Motorstrom gemessen und durch eine Regelung der Anschaltzeit der Spannungsquelle während eines ersten Intervalls auf einen ersten pro Schrittphase konstanten Wert gehalten wird, dadurch gekennzeichnet, dass das erste Intervall an das Ende der Beschleunigungsphase gelegt ist, dass während eines nach dem ersten in der selben Schrittphase angeordneten zweiten Intervalls durch Regelung der Anschaltzeit der Spannungsquelle der Motorstrom auf einen zweiten pro Schrittphase konstanten Wert gehalten wird, welcher ein vorgegebenes festes Verhältnis zum ersten Wert hat, dass pro Schritt des Motors durch Bestimmung des Verhältnisses oder der rechnerischen Differenz von relativer Einschaltzeit im ersten Intervall und der mit dem vorgegebenen Verhältnis multiplizierten relativen Einschaltzeit im zweiten Intervall eine Information über den Antriebszustand des Motors erzeugt wird, und dass der Motorstrom pro Schrittphase derart geregelt wird, dass die genannte Differenz Null Wird.

2. Verfahren nach Patentanspruch 1, dadurch gekennzeichnet, dass das erste Intervall nach dem Überschreiten der grössten Winkelgeschwindigkeit und das zweite Intervall am Ende der Antriebsphase, d. h. kurz vor dem Erreichen der nächsten Schritthaltestelle angeordnet ist.

3. Verfahren nach Patentanspruch 2, dadurch gekennzeichnet, dass der Stromwert im zweiten Messintervall gleich dem durch den konstanten Wert geteilten Stromwert im ersten Messintervall ist.

4. Schaltungsanordnung zur Durchführung des Verfahrens nach Patentanspruch 1, gekennzeichnet durch :
— Mittel zur Messung des Motorstroms ($i_m$) mittels der Impedanz von wenigstens einer den Motor (M) an die Spannungsquelle ($U_B$) anschaltenden Schaltstufe,
— Mittel zur Regelung der Anschlusszeit der Spannungsquelle derart dass der Motorstrom konstant gehalten wird,
— Mittel zur Erzeugung einer Information über den Antriebszustand des Motors während zweier Messintervalle pro Schritt des Motors durch Bestimmung eines die induzierte Spannung repräsentierenden Wertes aus dem Ist-Wert des Motorstromes und dessen Anschaltzeit, und
— Mittel zur Regelung des Konstantwertes des Motorstromes, derart, dass der Quotient, gebildet aus der mittleren induzierten Spannung im ersten Messintervall und der mittleren induzierten Spannung im zweiten Messintervall auf einem bestimmten konstanten Wert gehalten wird.

5. Schaltungsanordnung nach Patentanspruch 4, dadurch gekennzeichnet, dass die Impedanz eines Schalttransistors (Q4) zur Bestimmung des Stromes verwendet ist.

**Claims**

1. A method of controlling the torque of a pulse-energized stepping motor whose supply voltage is of variable duration, the motor current being measured and being maintained at a first value which is constant for each stepping phase by controlling the energizing time during which the voltage is connected in a first time interval, characterized in that the first interval occurs at the end of the acceleration phase, in that in a second interval following the first interval in the same stepping phase the motor current is maintained at a second value which is constant for each stepping phase by controlling the energizing time during which the voltage source is connected, which second value is in a predetermined fixed ratio to the first value, in that information about the energizing condition of the motor is obtained for each step of the motor by determining the ratio or the arithmetic difference between the relative energizing time in the first interval and the relative energizing time in the second interval multiplied by the predetermined ratio, and in that the motor current in each stepping phase is controlled in such a way that said difference becomes zero.

2. A method as claimed in Claim 1, characterized in that the first interval occurs after the maximum angular velocity has been exceeded and the second interval occurs at the end of the energizing phase, i. e. briefly before the portion where the next step end is reached.

3. A method as claimed in Claim 2, characterized in that the current value in the second measuring interval is equal to the current value in the first measuring interval divided by the constant value.

4. A circuit arrangement for carrying out the method as claimed in Claim 1, characterized by :
— means for measuring the motor current ($i_m$) by means of the impedance of at least one switching stage which connects the motor (M) to the voltage source ($U_B$),
— means for controlling the energizing time during which the voltage source is connected, in such a way that the motor current is maintained constant,
— means for deriving information about the energizing condition of the motor during two measuring intervals for each step of the motor by determining a value which is representative of the induced voltage from the actual value of the motor current and the energizing time, and
— means for controlling the constant value of the motor current in such a way that the quotient of the average induced voltage in the first measuring interval and the average induced value in the second measuring interval is maintained at a specific constant value.

5. A circuit arrangement as claimed in Claim 4, characterized in that the impedance of a switching transistor (Q4) is employed for determining the current.

## Revendications

1. Procédé de réglage du couple d'un moteur pas-à-pas excité par des impulsions, le temps d'application de la tension d'excitation étant variable, procédé suivant lequel le courant de moteur est mesuré et, par un réglage du temps de branchement sur la source de tension, est maintenu durant un premier intervalle de temps à une première valeur qui est constante pour chaque phase d'exécution d'un pas, caractérisé en ce que le premier intervalle de temps est situé à la fin de la phase d'accélération, en ce que, durant un second intervalle de temps qui, dans la même phase d'exécution d'un pas, vient après ledit premier intervalle de temps, le courant de moteur est maintenu par réglage du temps de branchement sur la source de tension à une seconde valeur qui est constante pour chaque phase d'exécution d'un pas et qui est dans un rapport fixe prédéterminé avec la première valeur, en ce que, pour chaque pas du moteur, on obtient une information sur l'état d'excitation du moteur par détermination du rapport ou de la différence arithmétique entre le temps d'excitation relatif dans le premier intervalle de temps et le temps d'excitation relatif dans le second intervalle de temps multiplié par le rapport prédéterminé, et en ce que, pour chaque phase d'exécution d'un pas, le courant de moteur est réglé de façon que ladite différence devienne égale à zéro.

2. Procédé selon la revendication 1, caractérisé en ce que le premier intervalle de temps est situé après le dépassement de la vitesse angulaire maximale et le second intervalle de temps est situé à la fin de la phase d'excitation, c'est-à-dire peu de temps avant que le point d'arrêt de pas suivant soit atteint.

3. Procédé selon la revendication 2, caractérisé en ce que la valeur de courant dans le second intervalle de mesure est égale à la valeur de courant dans le premier intervalle de mesure, divisée par la valeur constante.

4. Circuit de mise en œuvre du procédé selon la revendication 1, caractérisé par :
— des moyens de mesure du courant de moteur ($i_m$) par, l'impédance d'au moins un étage de commutation branchant le moteur (M) sur la source de tension ($U_B$),
— des moyens pour régler le temps de branchement sur la source de tension de façon que le courant de moteur soit maintenu constant,
— des moyens pour fournir une information sur l'état d'excitation du moteur durant deux intervalles de mesure pour chaque pas du moteur par détermination, à partir de la valeur effective du courant de moteur et du temps d'excitation, d'une valeur représentant la tension induite et
— des moyens pour régler la valeur constante du courant de moteur de façon que le quotient de la tension induite moyenne dans le premier intervalle de mesure et de la tension induite moyenne dans le second intervalle de mesure soit maintenu à une valeur constante déterminée.

5. Circuit selon la revendication 4, caractérisé en ce que l'impédance d'un transistor de commutation (Q4) est utilisée pour la détermination du courant.

FIG.1

FIG.2

$$I_{R1} = \frac{V_{ref1}}{R_0}$$

$$I_{R2} = \frac{V_{ref2}}{R_0} = \frac{V_{ref1}}{kR_0} = \frac{I_{R1}}{k}$$

FIG.4

FIG. 3a

FIG. 3b

FIG. 5

FIG. 6

FIG. 7

3